# EUROPEAN PATENT SPECIFICATION

(11) **EP 1 249 364 B1**
(45) Date of publication and mention of the grant of the patent: **19.11.2008**
(21) Application number: 02252541.4
(22) Date of filing: 10.04.2002
(51) Int. Cl.: B60P 1/52, B65G 67/20

(54) **Improvements in and relating to load handling skates**
Verbesserungen von Lastförderwagen
Améliorations relatives à un chariot porte-charge

(30) Priority: 12.04.2001 GB 0109192
(43) Date of publication of application: 16.10.2002
(73) Proprietor: Blackrock Engineering Limited, Great Budworth, Nr. Northwich, Cheshire CW9 6HF (GB)
(72) Inventor: Kordel, Wojtek, Nr Northwich, Cheshire CW9 6HF (GB)
(74) Representative: Lyons, Andrew John

(56) References cited:
- EP-A- 1 081 070
- DE-U1- 20 005 022
- DE-U1- 20 014 769
- US-A- 4 979 863

## Description

The present invention relates to a load handling skate.

US4979863 describes apparatus for transferring a group of unit loads between a shipping dock and a vehicle bed comprises a transfer beam assembly which has a base equipped with wheels engageable with the surfaces of the shipping dock and vehicle bed, has a length greater than that of the vehicle bed, and is movable lengthwise by a reversible drive unit installed on the shipping dock, the movement being defined by guide rails on the shipping dock. Load engaging members mounted on the base of the assembly are vertically movable by inflatable tubes between a raised, load supporting position and a lowered load clearing position. Individual load units are assembled into a load unit group for transfer to a vehicle, or disassembled from a load unit group transferred from a vehicle, by raising and lowering movements of the load engaging members, and by indexing movement of the transfer beam assembly between a normal position and a pickup station adjacent the end of the assembly remote from the vehicle receiving edge of the shipping dock. The present invention relates to a load handling skate.

The present invention relates to a load handling trolley or skate which is designed to run in a track and which comprises an elongate load engager, a series of bogies which are longitudinally moveable with respect to the elongate load engager and co-operable with ramps of the elongate load engager for the purpose of raising and lowering the load engager. An actuating mechanism comprising two pivotably interconnected element, the first of which is also pivotably connected to the load engager and the other of which is pivotably connected with a chassis of a first bogie assembly, is provided to control raising and lowering of the load engager using a lever which is releaseably engageable with the first of first said pivotable links. The load handling trolley or skate is designed to operate in a track comprising an open top channel built into a vehicle load bed. The channels are made of steel to resist wear and the skates are designed to be a close fit in the channels. The specification calls for running clearances of 1.5mm and tolerances of 1mm. As a consequence there is very little wear of the components.

In an attempt to reduce weight, attempts have been made by vehicle body builders to utilise a channel made of aluminum rather than steel. This has resulted in a problem with track wear caused by the sides of the load engager rubbing on the sides of the channel. In an attempt to solve this, nylon pads have been fitted to the sides of the bogie frame but this has not proved to be durable because the close running tolerances leave little room for any significant wear of the pads before the sides of the load engager come into contact with the track.

The present invention aims to provide a solution whilst retaining all the existing features of the skate.

Accordingly, the present invention provides a load handling trolley for use in a channeled track and comprising at least one bogie having rollers for supporting the trolley for longitudinal movement in the track, and a load engager which is moveably mounted with respect to the at least one bogie for movement between raised and lowered positions, the load engager comprising an inverted channel section, and the at least one bogie having a pair of spaced side frames, at least an upper part of which is dimensioned to fit within the inverted channel section of the load engager, at least in the lowered position, the trolley being provided with a plurality of rolling elements positioned, in use, to engage, with opposite side walls of the channeled track and wherein lower edges of the load engager are relieved to accommodate the rolling elements when the load engager is in the lowered position, characterized in that the relieving is chamfered to the leading end so as to clear the rollers during elevation of the load engager. Conveniently the relieving comprises a notch cut in from a lower edge of the load engager.

Conveniently the rolling elements comprise wheels or rollers and hereinafter are referred to as side rollers. The side rollers are disposed in the side frames of one or more of the bogies. Most usually in the two end most bogies.

Conveniently the relieving comprises a notch cut in from a lower edge of the load engager. The existing design of skate is provided with a track cleaning pad adjacent to each of its ends and the side rollers are disposed as close as possible to the ends of the trolley without disturbing the position of the track cleaning pads and the end most rollers or any braking mechanism. It is preferable if the lower part of the outer edges of the channel section load engager are cut back to allow for wear of the side wheels/rollers. Preferably the lower part is chamfered.

The preferred track has joggled side walls.

The present invention will now be described further by way of example only with reference to the accompanying drawings, in which:-
Figure 1 is a cut away side view of the leading and trailing ends of a load handling skate embodying the invention,
Figure 2 is a perspective view of the handling skate of Figure 1, from one end and below showing the load engager in its raised position,
Figure 3 is a side view of one set of bogies as used in the embodiment of figure 1 but to a larger scale,
Figure 4 is a plan view of the bogie of Figure 3,
Figure 5 is a view in the direction of arrow A of Figure 4,
Figure 6 is an end view in the direction of Arrow B of Figure 1 drawn to a larger scale, and
Figure 7 is an end view in the direction of Arrow B of Figure 1 showing the load engager in its elevated position.

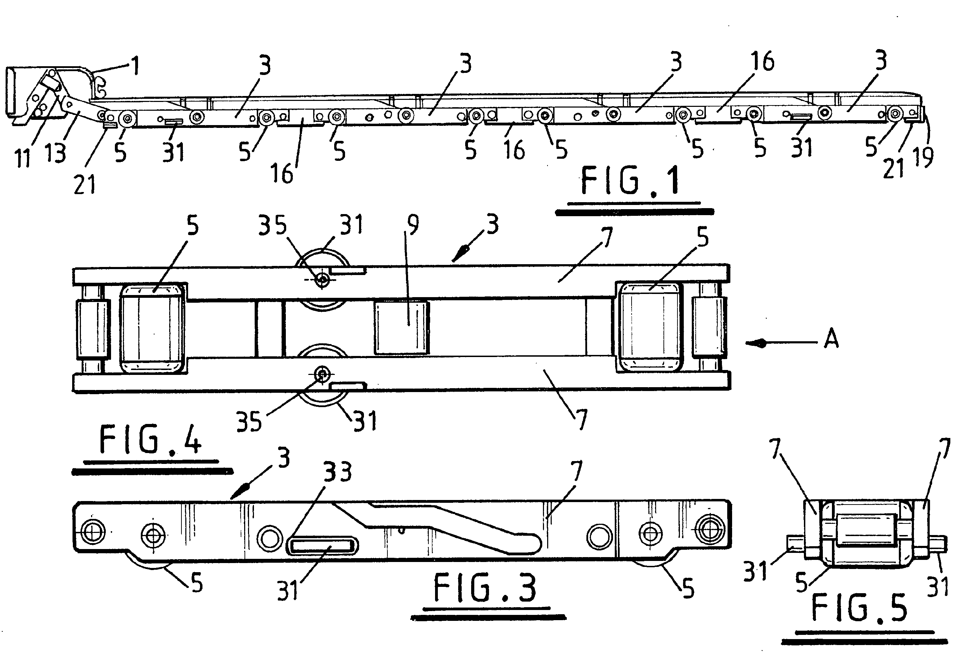

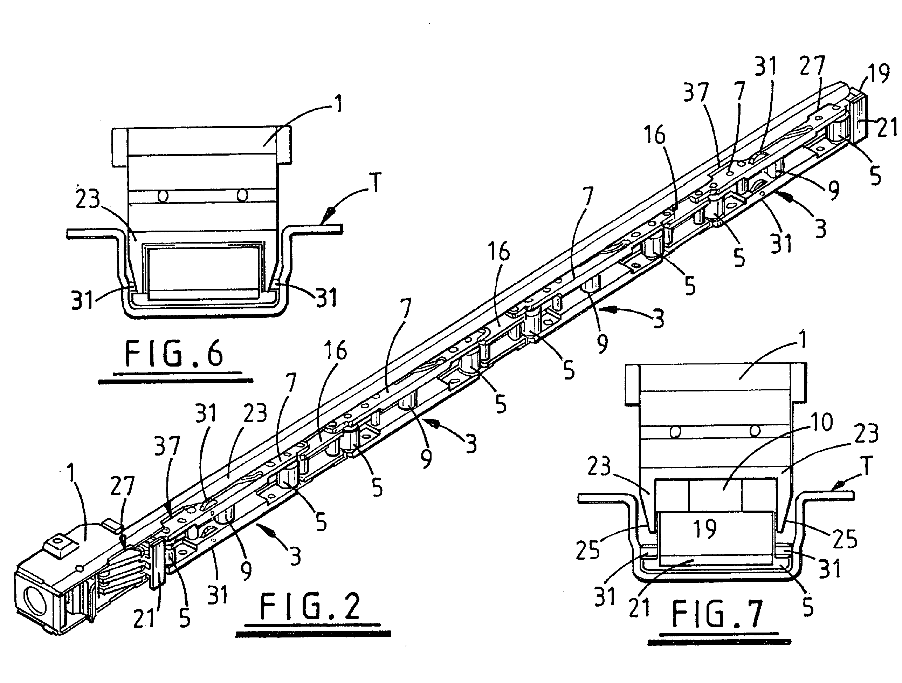

Referring to the drawings, the load handling trolley which is designed to run in a track T (see Figures 6 and 7) comprises an elongate load engager 1, a series of boggies 3 each of which has a plurality of rollers 5 which run on the track and journalled for rotation in a pair of spaced side frames 7 of the bogie 3. The bogies are longitudinally moveable with respect to the elongate load engager, and have rollers 9 which cooperate with ramps (only visible clearly in Figure 1) of the elongate load engager for the purpose of raising and lowering the load engager. An actuating mechanism comprising two pivotably interconnected elements, 11, 13, the first of which 11 comprises a bell crank and is pivotably connected with the load engager, and the other of which 13 is pivotably connected with the frame 7 of a first bogie element. The actuating mechanism is provided to control raising and lowering of the load engager using a lever (not illustrated) which is releaseably engageable with the first of said pivotable links. Respective pairs of bogies are interconnected by a link element 16 which is journaled to each of the adjacent bogie assemblies. An end stop at 19 is provided at the leading end of the trolley and track cleaning pads 21 are provided at the leading and trailing ends of the bogie assemblies.

The elongate load engager 1 comprises a longitudinal channel section having a housing at one end in which the actuating links 11, 13 are received. The channel section has downwardly depending side edges 23 spaced sufficiently apart to receive the side frames 7 of the bogie assemblies. Figure 2 shows relieving 27 of the lower edges of the sides 23 of the load engager to receive the track cleaning pads 21 when the load engager is in the lowered position.

In order to avoid wear of the channeled track in which the load engager runs by contact of the sides 23 of the load engager with the track, when made from a less desirable material than the elongate load engager, the leading and trailing sets of bogies are provided with side rollers 31, one in each side frame 7. The rollers are positioned to roll along the side walls of the channel track T thereby eliminating rubbing friction. The rollers are disposed to rotate in a substantially horizontal plane, corresponding to the plane of longitudinal movement of the load handling trolley and in use the axis of rotation of the rollers 31 is substantially vertical. The side frames are apertured at 33 to accommodate the rollers 31 and the rollers 31 are journalled on pins 35 located in bores in the side frame. As illustrated in Figure 2, the lower edges of the two side frames 23 are cut away at 37 to accommodate the rollers 31 when the load engager is in its lowered position. The forward edge of the aperture 37 is tapered so as to clear the rollers 31 during the raising and lowering movement. Preferably the lower edges are chamfered at 15° to the side edges, as shown in Figures 5, 6, and 7. In the event of wear of the side rollers the chamfered side faces 25 ensure that the load engager re-enters the track on lowering from its raised position.

## Claims

1. A load handling trolley for use in a channelled track and comprising at least one bogie (3) having rollers (5) for supporting the trolley for longitudinal movement in the track, and a load engager (1) which is moveably mounted with respect to the at least one bogie for movement between raised and lowered positions, the load engager comprising an inverted channel section, and the at least one bogie having a pair of spaced side frames (7), at least an upper part of which is dimensioned to fit within the inverted channel section of the load engager, as least in the lowered position, the trolley being provided with a plurality of rolling elements (31) positioned, in use, to engage with opposite side walls of the channelled track and wherein lower edges of the load engager are relieved (37) to accommodate the rolling elements when the load engager is in the lowered position, **characterized in that** the relieving (37) is tapered to the leading end so as to clear the rollers during elevation of the load engager.

2. A load handling trolley as claimed in claim 1 in which the trolley has at least two longitudinally spaced rolling elements (31) for engaging each side wall of the channelled track.

3. A load handling trolley as claimed in claim 1 or 2 in which the opposite side frames (7) of at least two bogies (3) are provided with a respective rolling element (31).

4. A load handling trolley as claimed in claim 1, 2 or 3 in which the rolling elements comprise wheels or rollers (31).

5. A load handling trolley as claimed in any one of the preceding claims in which the relieving comprises a notch cut in from a lower edge of the load engager.

6. A load handling trolley as claimed in any one of the preceding claims in which a lower part of outer edges (23) of the channel section load engager (1) are cut back to allow for wear of the side wheels/rollers.

7. A load handling trolley as claimed in claim 6 in which the lower part is chamfered.

8. A load handling trolley as claimed in any one of the preceding claims comprising three or more bogie assemblies (3) and wherein the bogies (3) at the leading and trailing ends of the trolley are provided with the rolling elements.

9. A load handling trolley as claimed in any one of the preceding claims in which track cleaning pads are provided to the leading and trailing ends of the trolley and the track cleaning pads are disposed between the rolling elements and the respective leading and trailing ends.

## Patentansprüche

1. Lastförderwagen zur Anwendung auf Schienen und umfassend mindestens ein Drehgestell (3) mit Rollen (5), um den Wagen für eine longitudinale Bewegung auf den Schienen zu tragen, und einen Lastempfänger (1), der im Hinblick auf das mindestens einen Drehgestell, für eine Bewegung zwischen einer gehobenen und einer gesenkten Position, beweglich montiert ist, wobei der Lastempfänger einen umgekehrten Kanalabschnitt umfasst, und wobei das mindestens eine Drehgestell ein Paar beabstandeter Seitenrahmen (7) hat, wobei mindestens ein oberer Teil davon so dimensioniert ist, dass er in den umgekehrten Kanalabschnitt des Lastempfängers passt, mindestens in der gesenkten Position, wobei der Wagen mit einer Mehrzahl von Rollelementen (31) versehen ist, die, bei Gebrauch, so positioniert sind, dass sie mit gegenüberliegenden Seitenwänden der Schienen eingreifen und wobei die unteren Ränder des Lastempfängers ausgespart (37) sind, um die Rollelemente, wenn sich der Lastempfänger in einer gesenkten Position befindet, aufzunehmen, **dadurch gekennzeichnet, dass** die Aussparung (37) sich zum vorderen Ende hin verjüngt, so dass die Rollen, während des Hebens des Lastempfängers, freigegeben werden.

2. Lastförderwagen nach Anspruch 1, wobei der Wagen mindestens zwei longitudinal beabstandete Rollelemente (31) hat, um mit jeder Seitenwand der Schienen einzugreifen.

3. Lastförderwagen nach Anspruch 1 oder 2, wobei die beabstandeten Seitenrahmen (7) von mindestens zwei Drehgestellen mit einem jeweiligen Rollelement (31) versehen sind.

4. Lastförderwagen nach Anspruch 1, 2 oder 3, wobei die Rollelemente Räder oder Rollen (31) umfassen.

5. Lastförderwagen nach irgendeinem der vorangehenden Ansprüche, wobei die Aussparung eine Kerbe umfasst, die von einem unteren Rand des Lastempfängers geformt wird.

6. Lastförderwagen nach irgendeinem der vorangehenden Ansprüche, wobei ein unterer Teil der äußeren Ränder (23) des Kanalabschnitt-Lastempfängers (1) gestutzt sind, um das Tragen der Seitenräder/- rollen zu ermöglichen.

7. Lastförderwagen nach Anspruch 6, wobei der untere Teil abgeschrägt ist.

8. Lastförderwagen nach irgendeinem der vorangehenden Ansprüche, umfassend drei oder mehr Drehgestellanordnungen (3) und wobei die Drehgestelle (3), am vorderen und hinteren Ende des Wagens, mit den Rollelementen versehen sind.

9. Lastförderwagen nach irgendeinem der vorangehenden Anspruch, wobei Bahnreinigungspads am vorderen und hinteren Ende des Wagens bereitgestellt sind und die Bahnreinigungspads zwischen den Rollelementen und dem jeweiligen vorderen und hinteren Ende angeordnet sind.

## Revendications

1. Chariot de manutention pour une utilisation sur des rails, et comportant au moins un bogie (3) ayant des roulettes (5) pour supporter le chariot pour un mouvement longitudinal sur les rails, et un introducteur de charge (1) monté de façon amovible à l'égard du au moins un bogie pour un mouvement entre les positions élevée et abaissée, l'introducteur de charge comprenant une section de canal inversé, et le au moins un bogie ayant une paire de chassis latéraux séparés (7), dont au moins une partie supérieure est dimensionnée de sorte à pouvoir s'engager dans la section de canal inversé de l'introducteur de charge, au moins dans la position abaissée, le chariot étant pourvu d'une pluralité d'éléments de roulement (31) positionnés, en service, pour s'engager dans des parois latérales opposées des rails, les bords inférieurs de l'introducteur de charge étant dépouillés (37) pour recevoir les éléments de roulement quand l'introducteur de charge est en position abaissée, **caractérisé en ce que** la dépouille (37) s'amincit vers l'extrémité avant afin de dégager les roulettes durant l'élévation de l'introducteur de charge.

2. Chariot de manutention tel que revendiqué dans la revendication 1, dans lequel le chariot comporte au moins deux éléments de roulement espacés longitudinalement (31) pour s'engager dans chaque paroi latéral du rail.

3. Chariot de manutention tel que revendiqué dans la revendication 1 ou 2, dans lequel les chassis latéraux opposés (7) d'au moins deux bogies (3) sont munis d'un élément de roulement respectif (31).

4. Chariot de manutention tel que revendiqué dans les revendications 1, 2 ou 3, dans lequel les éléments de roulement comprennent des roues ou des roulettes (31).

5. Chariot de manutention tel que revendiqué dans l'une quelconque des revendications précédentes, dans lequel le dépouillage comprend une entaille formée à partir d'un bord inférieur de l'introducteur de charge.

6. Chariot de manutention tel que revendiqué dans l'une quelconque des revendications précédentes, dans lequel une partie inférieure des bords extérieurs (23) de l'introducteur de charge à section de canal (1) est échancrée pour permettre le portage des roues/roulettes latérales.

7. Chariot de manutention tel que revendiqué dans la revendication 6, dans lequel la partie inférieure est chanfreinée,

8. Chariot de manutention tel que revendiqué dans l'une quelconque des revendications précédentes, comprenant trois ensembles de bogies (3) ou plus et dans lequel les bogies (3) aux extrémités avant et arrière du chariot sont munis des éléments de roulement.

9. Chariot de manutention tel que revendiqué dans l'une quelconque des revendications précédentes, dans lequel des tampons de nettoyage de voie sont pourvus sur les extrémités avant et arrière du chariot et les tampons de nettoyage de voie sont disposés entre les éléments de roulement et les extrémités avant et arrière respectives.
